# EUROPEAN PATENT SPECIFICATION

(11) **EP 2 117 768 B1**
(45) Date of publication and mention of the grant of the patent: **03.11.2010**
(21) Application number: 08717333.2
(22) Date of filing: 03.03.2008
(51) Int. Cl.: B23Q 7/04

(54) **MANIPULATING DEVICE FOR LATHES, IN PARTICULAR FOR VERTICAL TURRET LATHES, AND A LATHE INCLUDING SAID DEVICE**
BETÄTIGUNGSVORRICHTUNG FÜR DREHMASCHINE, INSBESONDERE FÜR VERTIKALREVOLVERDREHMASCHINEN UND DREHMASCHINE MIT DIESER VORRICHTUNG
DISPOSITIF DE MANIPULATION POUR DES TOURS, EN PARTICULIER POUR DES TOURS À TOURELLE VERTICALE, ET TOUR INCLUANT LEDIT DISPOSITIF

(30) Priority: 07.03.2007 IT PD20070077
(43) Date of publication of application: 18.11.2009
(73) Proprietor: Maus S.p.A., 35011 Campodarsego PD (IT)
(72) Inventor: SAMMARTIN, Roberto, I-35030 Selvazzano Dentro (pd) (IT)
(74) Representative: Fabris, Stefano
(86) International application number: PCT/EP2008/052570
(87) International publication number: WO 2008/107420

(56) References cited:
- EP-A- 0 539 837
- DE-A1- 3 206 547
- GB-A- 2 301 338
- US-A- 3 910 423

## Description

### Technical field

The present invention concerns a lathe, in particular a vertical turret lathe, having the characteristics mentioned in the preamble of main claim 1.

### Technological background

The invention finds a particular, although not exclusive, application in the field of vertical turret lathes in which the workpiece to be machined is disposed on a table or chuck rotating about a vertical axis, and wherein the toolholder saddle or carriage is slidably mounted on a horizontal guide or traverse also capable of vertical raising/lowering movements with respect to the chuck.

A lathe having the features outlined above is known from EP 539837.

Known solutions provide for the use of manipulating devices, provided on the toolholder saddle, in particular comprising a pair of workpiece gripping devices respectively mounted on one or the other of the opposed lateral sides of the toolholder saddle. With this configuration, the gripping devices provide for the loading of the workpieces to be machined and the unloading of the machined workpieces, by means of the movement of the toolholder saddle along the horizontal guide. A preferred configuration provides that a workpiece loading station and a workpiece unloading station are respectively positioned on the lathe on laterally opposed sides. In this case, when the machining of a workpiece is completed, the saddle can be displaced into a position in which one gripping device is located at the loading station to take up a workpiece to be machined, and the other gripping device is located in axis on the chuck to take up the workpiece just machined. Once the simultaneous gripping of the workpieces by both manipulators has occurred, a subsequent movement of the saddle along the guide brings it into a second position in which the device with the workpiece to be machined is at the chuck and the device with the machined workpiece is at the unloading station. In this way, by means of suitable dimensioning of the distances between the loading and unloading stations and the chuck, the result obtained is that the lathe itself, by means of the movement of the toolholder saddle, undertakes the loading and unloading of the workpieces. A technical solution of the aforesaid type, if the loading and unloading stations provide workpiece conveyors equipped with mechanical stops for arresting the workpiece, in particular at the loading station, in a predetermined position so as to be grasped correctly by the gripping device, has certain limitations.

In particular, the arrival at the loading station of workpieces to be machined having different dimensions requires a different, corresponding positioning of the mechanical stop necessary to compensate the dimensional differences of the workpieces and to allow the manipulator, with the same horizontal travel of the saddle, to position itself in axis with the workpiece in order to grasp it correctly. This makes the loading/unloading sequence not very flexible, involving additional times for the operations of registration of the positioning of the mechanical stop, for which the intervention of specialised personnel is required, all this having a deleterious effect on the productivity of the production line in which the lathe having the loading and unloading stations is positioned.

### Disclosure of the invention

The problem underlying the present invention is that of providing a manipulating device for lathes and a lathe including such a device which are structurally and functionally designed so as to make it possible to remedy the limitations mentioned with reference to the prior art cited.

This problem is solved by the invention by means of a manipulating device and a lathe which are produced according to the following claims.

### Brief description of the drawings

Other characteristics and advantages of the invention will become clearer from the following detailed description of a preferred exemplary embodiment thereof illustrated by way of non-limiting example with reference to the appended drawings, in which:
- Figure 1 is a diagrammatic front view of a manipulating device according to the invention fitted to a vertical turret lathe,
- Figure 2 is a partial diagrammatic view, on an enlarged scale, of a detail of the device of Figure 1 in two different configurations,
- Figure 3 is a diagrammatic front view of the manipulating device of the preceding figures, shown in two different operating positions,
- Figure 4 is a view corresponding to that of Figure 1, of a configuration of the device of the invention different from that of Figure 1.

### Preferred embodiments of the invention

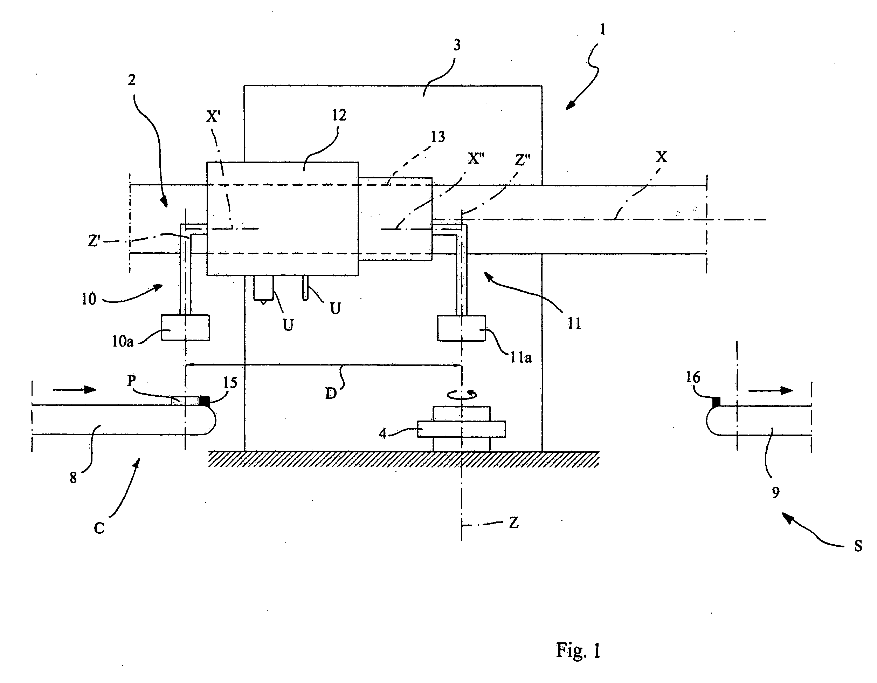

With reference to the drawings mentioned, the reference 1 indicates as a whole a manipulating device, produced according to the invention, and designed to be fitted to a lathe 2 with vertical turret 3. With particular reference to Figure 1, the lathe 2, shown only diagrammatically, comprises a workpiece-holding chuck 4 rotating about a main axis Z, and arranged to rotate the workpiece during machining. The lathe 2 further comprises a guide or traverse 5 extending axially in a direction X, directed perpendicularly to the axis Z, and on which one or more tool holder saddles are guided parallel to the direction X. Since the configuration described is referred to a lathe with a turret termed "vertical", this being understood to be the direction rising perpendicularly from the plane where the lathe rests on the ground, reference will also be made hereinafter to the direction X as the "horizontal" direction (perpendicular to the direction Z).

For the transfer of the workpieces to be machined, indicated by P in the drawings, to and from the lathe, the lathe is associated with a loading station C for the workpieces P to be machined and with a separate unloading station S for the machined workpieces, the stations being disposed on laterally opposed sides of the lathe and suitably spaced therefrom. Each loading and unloading station is conveniently provided with a respective conveyor belt for respectively feeding the workpieces P to be machined to the lathe and for unloading the machined workpieces and removing them from the work area. The reference 8 indicates the conveyor belt to the loading station C, while 9 indicates a similar belt located in the unloading station S.

Between the opposed ends of the belts 8, 9 the chuck 4 is positioned at predetermined distances from the belts, preferably in an intermediate position between them.

The manipulating device 1 comprises a first and a second manipulator, indicated respectively by 10 and 11, each of which comprises a respective gripping device 10a, 11a, provided for example in the form of a pincer or another similar item of equipment for gripping and manipulating the workpiece P. Each manipulator 10, 11 is in addition rigidly connected to a respective, different saddle 12,13, both the saddles being slidably mounted on the guide 5 so as to be displaceable in the direction X with respective movements independent of one another. In this regard, each saddle 12, 13 may be controlled by separate, different entraining means, for example of the type including recirculating ball screws, or other similar systems for transmission and conversion of the motion. In this way, owing to the independent movements of the saddles 12, 13, the respective manipulators 10, 11 are displaceable, together with the corresponding saddles, with movements independent of one another, in particular in the axial direction X. The reference symbols X' and X", for greater clarity, indicate the respective directions of the axial strokes executed by the manipulators 10, 11. The result is that the distance, indicated by D, between the manipulators, measured in the direction X, is therefore variable and may conveniently be adjustable during the working cycle of the lathe, for the function which will become clear hereinafter.

One or both of the saddles 12, 13 may be equipped with one or more tools U, shown only diagrammatically in the drawings, and suitable for carrying out the preselected machining operations for the workpiece P.

In the loading station C, at the free end of the conveyor belt 8 a mechanical stop member 15 is provided which, by interfering with the travel of the workpiece P along the belt, functions as a stroke limiter for arresting the workpiece P in a preselected position relative to the belt. This positioning is selected to permit the manipulator 10 to position itself, in its travel along X', coaxially with the workpiece P to be picked up on the belt. Provision is made for this positioning to take place in one of the end positions of the travel of the manipulator along X'. In this position, a vertical movement of the manipulator 10 parallel to the axis Z causes the gripping device 10a to grasp the workpiece P on the belt 8.

The reference 16 indicates a further mechanical stop member capable of being associated with the unloading belt 9 in a manner entirely similar to that provided for in the belt 8 described above.

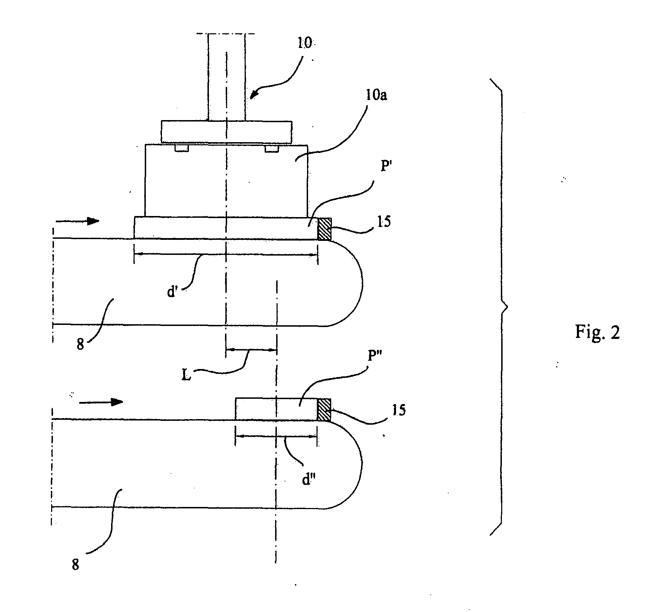

With reference to Figure 2, the references P' and P" designate workpieces to be machined, for example having axial symmetry, and which have different diameters, indicated respectively by d' and d". Due to the effect of the positioning of the stop member 15, the workpieces P' and P" are therefore out of axis with each other. This means that the manipulator 10, in order to be brought into axis with the workpieces, must execute different strokes in the direction X'. In particular, with respect to the workpiece P", when the workpiece P' is fed to the belt, the manipulator is required to execute a further stroke, indicated by L (equal to the interaxial distance between the workpieces P' and P") to bring itself into a position coaxial with the workpiece P'. In this case, owing to the fact that the manipulators 10, 11 are displaceable with independent movements, the supplementary stroke L may be executed only by the saddle 12, no displacement of the saddle 13 being required. All this makes it possible to compensate the dimensional differences of the workpieces P arriving on the belt 8, without requiring any repositioning of the stop member 15, it being simply necessary to regulate the distance D between the manipulators,' which may be previously programmed according to the type of workpieces to be machined, fed to the loading station. In a similar manner, compensation for such dimensional differences may occur at the unloading station, where by means of a movement along X", the sole manipulator, together with the saddle 13, is displaced in a supplementary stroke, to obtain the positioning of same in axis with the unloading position defined on the belt 9 by the stop 16. In this case also, no repositioning of the stop 16 is therefore required when machined workpieces P of different dimensions are unloaded. In an alternative embodiment of the invention, provision is made that the manipulators 10, 11 can be further displaceable along additional axes. In particular, provision is made for the manipulator 10 to be displaceable along an axis Z' directed parallel to the direction Z, and for the manipulator 11 to be displaceable along a corresponding axis Z", also parallel to the axis Z. The movements along said additional axes may conveniently be provided to be independent of one another. In this case they may be obtained by means of independent movements of the respective saddles 12, 13 to which the corresponding manipulators are rigidly connected. Alternatively, it is possible to provide for each manipulator 10, 11 to be capable of a relative movement, along the respective axis Z', Z", relative to its own corresponding saddle 12, 13.

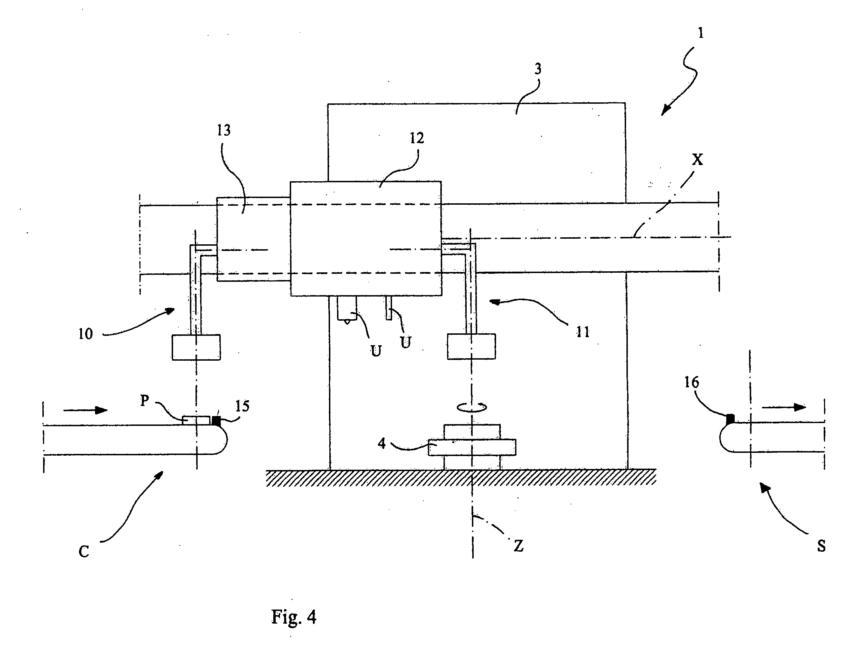

Figure 4 illustrates a configuration of the device of the invention different from that of Figure 1, in which the saddle 13 is arranged for left-hand mounting (viewing the drawing) with respect to the toolholder saddle 12, unlike in Figure 1, in which the right-hand mounting of the saddle 13 is shown. In other words, the saddle 13 may be produced so that it can be mounted on the right or on the left relative to the saddle 12, with suitable linking of the manipulators 10, 11 to the respective saddles. In the configuration of Figure 4, with left-hand mounting it is possible to compensate the dimensional differences of the workpieces P, by means of an additional stroke of the saddle 12, independently of the working stroke of the toolholder saddle 13, this latter not therefore being influenced, in its working stroke, by the arrival at the loading station C of dimensionally different workpieces.

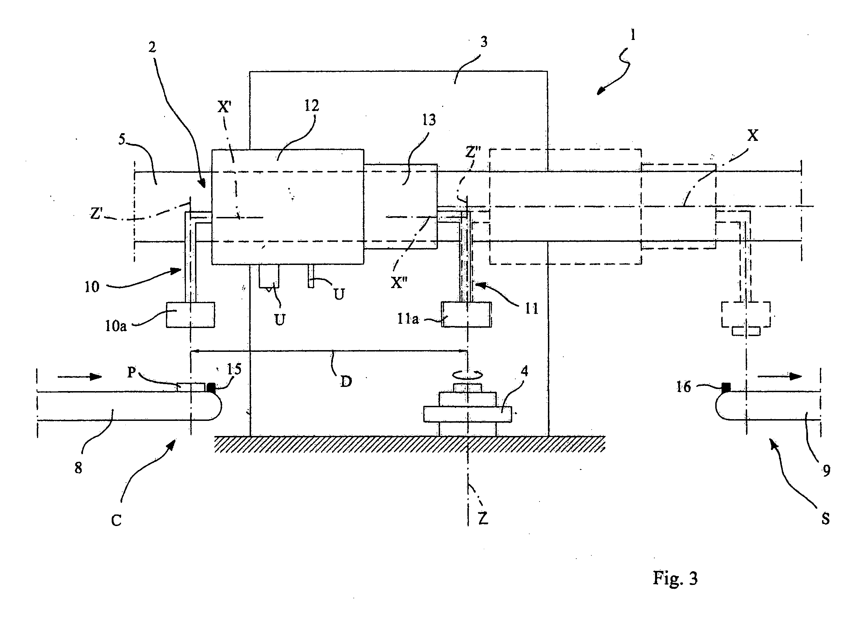

In operation, provision is made for the manipulating device 1 to be displaceable between a first and a second operating state shown respectively by solid lines and by dashed lines in Figure 3. In the first state the manipulating device is positioned with the manipulator device 10 at the belt 8, where it is located in axis with a workpiece P to be machined, and with the manipulator device 11 located in axis with the chuck in which a machined workpiece P is locked. With corresponding vertical movements for lowering of the manipulators 10, 11, the workpiece P to be machined is grasped by the manipulator 10 and the machined workpiece P is grasped by the manipulator 11. With a subsequent vertical raising followed by a horizontal movement of the saddles 12, 13, the manipulators are brought into the second operating state (dashed lines in the drawing), in which the manipulator device 10 is brought into axis with the chuck 4 and the device 11 is brought to the unloading belt in order to deposit the machined workpiece on the belt itself. A vertical lowering movement of the manipulators completes the step in which the workpiece P to be machined is positioned by the manipulator 10 on the chuck and the machined workpiece is moved by the manipulator 11 onto the unloading belt. It is to be understood that when workpieces P of different dimensions follow one another, by means of the additional movements, independent of one another, of the manipulators, the dimensional differences of the workpieces are compensated, without requiring repositioning or displacement of the stop members on the belts 8, 9.

The invention thus solves the problem posed, providing the advantages mentioned above compared with the known solutions.

In particular, there will be greater flexibility of the loading and unloading phases of the lathe by means of the manipulating device according to the invention, in particular when workpieces or batches of workpieces to be machined which are dimensionally different from one another are fed to the lathe.

## Claims

1. A lathe, in particular a vertical turret lathe including at least one toolholder saddle, of the type comprising at least a first and a second workpiece manipulator device (10, 11) associated with said saddle, such that by means of the displacement of said toolholder saddle said manipulator devices (10, 11) are displaceable between a station (C) for loading workpieces (P) to be machined and a station (S) for unloading the machined workpieces, a workpiece table (4) of said lathe being placed between said stations (C, S) to support the workpiece (P) during machining on the lathe, **characterized in that** said first and second manipulator device (10, 11) are displaceable with movements independent of one another, at least in the direction (X) of displacement of the toolholder saddle to and from said loading (C)and unloading (S) stations and the workpiece table (4), in such a way that the distance between said manipulator devices (10, 11) on the lathe is adjustable at least in said direction (X).

2. A lathe according to claim 1, wherein said devices (10, 11) are displaceable with movements independent of one another in a first direction (X', X") substantially perpendicular to the axis (Z) of rotation of the workpiece table (4) associated with the lathe.

3. A lathe according to claim 2, wherein said first and second manipulator device (10, 11) are capable of being mounted on respective, different saddles (12, 13) controlled with movements independent of one another, in at least said first direction (X', X").

4. A lathe according to claim 3, wherein said first and second manipulator device (10, 11) are displaceable, independently of one another, in a further, second direction (Z', Z") perpendicular to said first direction.

5. A lathe according to claim 4, wherein said second direction (Z', Z") is parallel to the axis (Z) of rotation of the workpiece table (4).

6. A lathe according to claim 4 or claim 5, wherein said saddles (12, 13) are displaceable with movements independent of one another, parallel to said second direction (Z', Z"), each of said manipulator devices (10, 11) being rigidly connected to the corresponding saddle (12, 13).

7. A lathe according to claim 4 or claim 5, wherein each of said manipulator devices (10, 11) is capable of being displaced relative to its own corresponding saddle (12, 13), parallel to said second direction.

8. A lathe according to any one of the preceding claims, comprising at least one toolholder saddle and a rotating workpiece-holding chuck, said at least one saddle being arranged to be displaced between a station (C) for loading workpieces (P) to be machined and a station (S) for unloading machined workpieces, a workpiece table (4) being placed between said stations (C,S), the toolholder saddle being provided with said manipulator devices (10, 11).

## Patentansprüche

1. Drehmaschine, insbesondere Vertikalrevolverdrehmaschine mit mindestens einem Werkzeughalterschlitten, des Typs, der mindestens eine erste und eine zweite Werkstückmanipulatorvorrichtung (10, 11) umfasst, die dem Schlitten derart zugeordnet sind, dass mittels der Verschiebung des Werkzeughalterschlittens die Manipulatorvorrichtungen (10, 11) zwischen einer Station (C) zum Beladen mit zu bearbeitenden Werkstücken (P) und einer Station (S) zum Entladen von bearbeiteten Werkstücken bewegbar sind, wobei ein Werkstücktisch (4) der Drehmaschine zwischen die Stationen (C, S) so platziert ist, dass das Werkstück (P) während eines Bearbeitens auf der Drehmaschine gelagert ist, **dadurch gekennzeichnet, dass** die erste und zweite Manipulatorvorrichtung (10, 11) mit voneinander unabhängigen Bewegungen mindestens in der Bewegungsrichtung (X) des Werkzeughalterschlittens zu und von der Belade- (C) und Entladestation (S) und dem Werkstücktisch (4) in der Weise bewegbar sind, dass der Abstand zwischen den Manipulatorvorrichtungen (10, 11) auf der Drehmaschine mindestens in der Richtung (X) einstellbar ist.

2. Drehmaschine nach Anspruch 1, wobei die Vorrichtungen (10, 11) mit voneinander unabhängigen Bewegungen in eine erste Richtung (X', X") im Wesentlichen senkrecht zur Rotationsachse (Z) des der Drehmaschine zugeordneten Werkstücktischs (4) bewegbar sind.

3. Drehmaschine nach Anspruch 2, wobei die erste und zweite Manipulatorvorrichtung (10, 11) dazu ausgebildet sind, dass sie auf zugehörige unterschiedliche Schlitten (12, 13) anzubringen sind, die mit voneinander unabhängigen Bewegungen mindestens in die erste Richtung (X', X") gesteuert werden.

4. Drehmaschine nach Anspruch 3, wobei die erste und zweite Manipulatorvorrichtung (10, 11) unabhängig voneinander in eine weitere, zweite Richtung (Z', Z") senkrecht zu der ersten Richtung bewegbar sind.

5. Drehmaschine nach Anspruch 4, wobei die zweite Richtung (Z', Z") zur Rotationsachse (Z) des Werkstücktischs (4) parallel ist.

6. Drehmaschine nach Anspruch 4 oder 5, wobei die Schlitten (12, 13) mit voneinander unabhängigen Bewegungen parallel zu der zweiten Richtung (Z', Z") bewegbar sind, wobei jede der Manipulatorvorrichtungen (10, 11) mit dem zugehörigen Schlitten (12, 13) starr verbunden ist.

7. Drehmaschine nach Anspruch 4 oder 5, wobei jede der Manipulatorvorrichtungen (10, 11) dazu ausgebildet ist, dass sie relativ zu ihrem eigenen zugehörigen Schlitten (12, 13) parallel zu der zweiten Richtung bewegbar ist.

8. Drehmaschine nach einem der vorhergehenden Ansprüche, umfassend mindestens einen Werkzeughalterschlitten und ein drehbares Werkstückhalter-Spannfutter, wobei der mindestens eine Schlitten so ausgebildet ist, dass er zwischen einer Station (C) zum Beladen mit zu bearbeitenden Werkstücken (P) und einer Station (S) zum Entladen von bearbeiteten Werkstücken bewegbar ist, wobei ein Werkstücktisch (4) zwischen die Stationen (C, S) so platziert ist, dass der Werkzeughalterschlitten mit den Manipulatorvorrichtungen (10, 11) versehen ist.

## Revendications

1. Tour, en particulier un tour vertical incluant au moins une glissière porte-outil, du type comprenant au moins un premier et un second dispositifs de manipulation de pièce (10, 11) associé avec ladite glissière, de telle manière qu'au moyen du déplacement de ladite glissière porte-outil lesdits dispositifs de manipulation (10, 11) peuvent être déplacés entre une station (C) pour charger de pièces (P) à usiner et une station (S) pour décharger les pièces usinées, une table de support de pièce (4) dudit tour étant placée entre lesdites stations (C, S) pour supporter la pièce (P) pendant l'usinage sur le tour, **caractérisé en ce que** lesdits premier et second dispositifs de manipulation (10, 11) dispositifs de manipulation (10, 11) peuvent être déplacés avec des mouvements indépendants les uns des autres, au moins dans la direction (X) de déplacement de la glissière porte-outil vers et depuis lesdites stations de chargement (C) et de déchargement (S) et la table de support de pièce (4), de telle manière que la distance entre lesdits dispositifs de manipulation (10, 11) sur le tour peut être réglée au moins dans ladite direction (X).

2. Tour selon la revendication 1, dans lequel lesdits dispositifs (10, 11) peuvent être déplacés avec des mouvements indépendants l'un de l'autre dans une première direction (X', X") sensiblement perpendiculaire à l'axe (Z) de rotation de la table de support de pièce (4) associée au tour.

3. Tour selon la revendication 2, dans lequel lesdits premier et second dispositifs de manipulation (10, 11) peuvent être montés sur différentes glissières (12, 13) respectives commandées avec des mouvements indépendants l'un de l'autre, dans au moins ladite première direction (X', X").

4. Tour selon la revendication 3, dans lequel lesdits premier et second dispositifs de manipulation (10, 11) peuvent être déplacés, indépendamment l'un de l'autre, dans une autre seconde direction (Z', Z") perpendiculaire à ladite première direction.

5. Tour selon la revendication 4, dans lequel ladite seconde direction (Z', Z") est parallèle à l'axe (Z) de rotation de la table de support de pièce (4).

6. Tour selon la revendication 4 ou la revendication 5, dans lequel lesdites glissières (12, 13) peuvent être déplacées avec des mouvements indépendants l'un de l'autre, parallèlement à ladite seconde direction (Z', Z"), chacun desdits dispositifs de manipulation (10, 11) étant connecté rigidement à la glissière (12, 13) correspondante.

7. Tour selon la revendication 4 ou la revendication 5, dans lequel chacun desdits dispositifs de manipulation (10, 11) peut être déplacé par rapport à sa propre glissière (12, 13) correspondante, parallèlement à ladite seconde direction.

8. Tour selon l'une quelconque des revendications précédentes, comprenant au moins une glissière porte-outil et un mandrin de maintien de pièce tournante, ladite au moins une glissière étant agencée pour être déplacée entre une station (C) pour charger des pièces (P) à usiner et une station (S) pour décharger les pièces usinées, une table de support de pièce (4) étant placée entre lesdites stations (C, S), la glissière porte-outil étant pourvue desdits dispositifs de manipulation (10, 11).
